# EUROPÄISCHE PATENTANMELDUNG

(11) **EP 2 163 532 A1**
(43) Veröffentlichungstag der Anmeldung: **17.03.2010**
(21) Anmeldenummer: 08016047.6
(22) Anmeldetag: 11.09.2008
(51) Int. Cl.: C04B 11/00, F27D 19/00

(54) **Verfahren und Anlage zur Herstellung von Hartgips**

(71) Anmelder: Claudius Peters Technologies GmbH, 21614 Buxtehude (DE)
(72) Erfinder: Göcke, Volker, 21702 Ahlerstedt (DE); Gehle, Tobias, 21714 Hammah (DE)
(74) Vertreter: Glawe, Delfs, Moll

(57) **Zusammenfassung**

Die Erfindung betrifft ein Verfahren zur Herstellung von Hartgips aus gebranntem Beta-Hemihydratgips, umfassend Zuführen des Beta-Hemihydratgipses zu einem Nachreaktor (3), Nachbehandeln im Nachreaktor (3), wobei aus dem Beta-Hemihydratgips Hartgips entsteht, Ausbringen des Hartgipses aus dem Nachreaktor (3) und Kühlen. Es erfolgt ein Kontrollieren der Temperatur bei Zuführen zum Nachreaktor (3) auf mindestens die Kalziniertemperatur, wobei in den Nachreaktor (3) Wasserdampf zugeführt wird und die Temperatur und der Druck im Nachreaktor (3) derart geregelt werden, dass die Temperatur mindestens die Kalziniertemperatur beträgt und ein Überdruck im Nachreaktor (3) herrscht.

## Beschreibung

Die Erfindung betrifft ein Verfahren zur Herstellung von Hartgips aus gebranntem Beta-Hemihydrat, umfassend ein Zuführen des gebrannten Beta-Hemihydrates zu einem Nachreaktor, Nachbehandeln im Nachreaktor, wobei aus dem Beta-Hemihydrat Hartgips entsteht, sowie Ausbringen des Hartgipses mit anschließendem Kühlen.

Es ist bekannt, dass Stuckgips in verschiedenen Formen auftreten kann, die sich in sogenannter Alpha- und Beta-Modifikationen des Hemihydrats unterscheiden. Der Kürze halber werden diese Modifikationen des Stuckgipses auch bezeichnet als Alpha-Gips (Hartgips) bzw. Beta-Gips. Beide Arten sind in Bezug auf die chemischen und mineralogischen Eigenschaften ihrer Halbhydrate identisch. Sie unterscheiden sich jedoch im Gefüge- und Kristallaufbau der einzelnen Partikel. Bei Beta-Gips sind die bei dem Kalzinieren gebildeten Halbhydratkristalle in der Regel klein ausgebildet und mit zahlreichen Kristallgitterfehlern behaftet. Dies gilt insbesondere für schnellkalzinierten Gips (Flash-Kalzinierung), wie er durch Mahl-, Drehrohr-, Kocher- und Fluidisierkalzinierung erhalten wird. Hierbei zeigen sich schwach bis stark zerklüftete poröse Strukturen in Kristallen. Dem gegenüber zeichnet sich Alpha-Gips dadurch aus, dass die Halbhydrat-Kristalle gut ausgebildet sind und nur wenige Gitterfehlstellen aufweisen. Die Alpha-Kristallform verleiht dem Gips eine hohe Druckbeständigkeit (daher auch die Bezeichnung Hartgips), und macht ihn so zu einem wertvollen Baustoff.

Üblicherweise wird Hartgips hergestellt aus Rohgips (Dihydrate). Hierzu sind verschiedene Verfahren bekannt. Ein erstes Verfahren arbeitet mit wässrigen Gipssuspensionen, die in einem Autoklaven bei Temperaturen von 105°C bis 165°C und einem Überdruck von gut 1 bis 6 bar bearbeitet werden. Es gibt auch ein druckloses Verfahren, bei dem eine Gipssuspension in Schwefelsäure mit anderen Säuren bei Temperaturen unter 105°C umgewandelt wird. Außerdem gibt es noch sogenannte quasi-trockene Verfahren, bei denen entwässerter Gips mit einer verhältnismäßig geringen Restfeuchte von weniger als 20 % in Autoklaven bei Temperaturen zwischen 105°C und 165°C und einen Überdruck von 1 bis 6 bar umgewandelt wird. All diesen Verfahren ist gemeinsam, dass das Rohmaterial (Dihydrat) direkt umgewandelt wird in Hartgips (Alpha-Halbhydrat). Weiter ist den Verfahren gemeinsam, dass sie aufwendig sind und hohe Kosten verursachen, sowohl in Bezug auf Energie wie auch verwendete Materialien (Säuren).

Es ist weiter ein Verfahren bekannt, bei dem Beta-Gips einer im Rahmen einer Nachbehandlung einer künstlichen Alterung unterzogen wird, um die mechanische Druckfestigkeit zu erhöhen. Das Verfahren sieht zuerst eine Kalzinierung zu herkömmlichem Stuckgips (Beta-Gips) vor, wobei im nachfolgenden Prozess aus dem Beta-Halbhydrat teilweise Alpha-Halbhydrat erzeugt wird. Um dies zu erreichen, wird bei der Nachbehandlung Wasser zugegeben, und zwar soviel, um die Temperatur der Suspension in einem Bereich unterhalb der Kalzinierungstemperatur abzusenken. Dadurch wird eine Rehydratisierung des Beta-Halbhydrats zu Dihydrat in Gang gesetzt. Nachfolgend wird der abgekühlte Gips wieder erwärmt auf eine Temperatur oberhalb der Kalzinierungstemperatur, sodass aus dem durch die Abkühlung rehydratisierten Dihydrat wiederum Halbhydrat gebildet wird, und zwar in der Alpha-Modifikation. Ein Nachteil dieses Verfahrens liegt darin, dass der erreichte Anteil der Alpha-Modifikation nicht sehr hoch ist, sodass es nur eine geringe Effizienz aufweist, überdies weist das Produkt noch verhältnismäßig hohe BET-Werte auf, die beträchtlich über denen von herkömmlichen Hartgips liegen.

Der Erfindung liegt die Aufgabe zugrunde, ein verbessertes Verfahren einer entsprechenden Anlage anzugeben, welches eine effizientere Herstellung von Hartgips.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zur Herstellung von Hartgips aus gebranntem Beta-Hemidydratgips, umfassend ein Zuführen des Beta-Hemidydratgipses zu einem Nachreaktor, Nachbehandeln im Nachreaktor, wobei aus dem Beta-Hemidydratgips Hartgips entsteht, und Ausbringen des Hartgipses, ist gemäß der Erfindung vorgesehen ein Kontrollieren der Temperatur auf mindestens die Kalziniertemperatur beim Zuführen zum Nachreaktor, Zuführen von Wasserdampf in den Nachreaktor, und Regeln der Temperatur und des Drucks im Nachreaktor derart, dass die Temperatur mindestens die Kalziniertemperatur beträgt und ein Überdruck im Nachreaktor herrscht. Der Kern der Erfindung liegt im Gedanken, durch die beanspruchten Schritte eine direkte Umwandlung von Beta-Halbhydrat in Alpha-Halbhydrat erreicht wird, ohne dass dabei ein Umweg über eine Rehydrierung zu Dihydrat genommen wird.
Die Erfindung macht sich zu Nutze, dass durch das Kontrollieren der Temperatur bei der Zufuhr des gebrannten Beta-Gipses zum Nachreaktor verhindert wird, dass die bei Unterschreiten der Kalziniertemperatur einsetzende Rehydrierung zu Dihydrat auftritt. Die Erfindung hat weiter erkannt, dass damit die Möglichkeit eröffnet wird, den heißen (d.h. mindestens Kalziniertemperatur aufweisenden) Beta-Hemidydratgips direkt zu Hartgips umzuwandeln, und zwar in feuchtheißer Atmosphäre unter Überdruckbedingungen. Durch die eingebrachte Feuchte wird der Wasserbedarf des Beta-Gipses befriedigt, sodass im Zusammenwirken mit der hohen Temperatur und dem Überdruck Kristallfehler geheilt werden, bis sich schließlich aus der Beta-Kristallstruktur die - in Bezug auf ihre mechanischen Eigenschaften vorteilhafte - Alpha-Kristallstruktur ergibt. Es entsteht so Hartgips mit einem Wassergipswert, der wesentlich niedriger als derjenige des Beta-Gipses liegt und damit einen erheblichen Anstieg der mechanischen Festigkeit mit sich bringt.

Die Kalziniertemperatur ist die Temperatur, über der im Gips sich das Dihydrat zu Hemihydrat umwandelt.

Das erfindungsgemäße Verfahren ermöglicht nicht nur auf elegante Weise die direkte Umwandlung von Stuckgips mit Beta-Halbhydrat zu Hartgips mit Alpha-Halbhydrat, sondern zeichnet sich weiterhin durch eine einfache und effiziente Betriebsweise aus. Es kann sowohl im Batch-Betrieb wie auch im kontinuierlichen Betrieb geführt werden; ebenso kann auch nachträglich aus bereits produziertem Stuckgips hochwertiger Hartgips erzeugt werden, wobei durch geeignete thermische Behandlung eine Rehydratisierung zu Dihydrat ausgeschlossen wird. Das Verfahren ist weiter flexibel in Bezug auf das Ausgangsmaterial, insbesondere kann statt Naturgips auch in großen Mengen anfallender, synthetischer Grips insbesondere aus Rauchgasentschwefelungsanlagen, oder auch Phosphorgips, wie er bei der Herstellung von Phosphorsäure anfällt, verwendet werden. Da gerade die letztgenannten Sorten in großen Mengen anfallen und deren Entsorgung bisher nicht geringe Kosten verursachte, bieten sich mit dem erfindungsgemäßen Verfahren neue Chancen, daraus Hartgips, als wertvollen Baustoff, zu schaffen.

Vorzugsweise liegt der Überdruck, unter dem die Nachbehandlung im Nachreaktor erfolgt, bei mindestens 0,4 bar, vorzugsweise bei mindestens 0,5 bar und weiter vorzugsweise bei weniger als 1 bar. Dieser Druckbereich hat sich als besonders günstig für die direkte Umwandlung von Beta-Hemihydrat zu Alpha-Hemihydrat erwiesen, und verlangt nur geringen Aufwand in Bezug auf Druckfestigkeit der Komponenten, verglichen mit den herkömmlichen Autoklavenverfahren, die bei Drücken bis zu 6 bar arbeiten. Zweckmäßigerweise ist vorgesehen, dass das nachzubehandelnde Gut durch Druckschleusen in den Nachreaktor ein- oder ausgebracht wird.

Das erfindungsmäßige Verfahren ist robust in Bezug auf die Qualität des zugeführten Beta-Gipses. So braucht er nicht vollständig kalziniert zu sein, sondern kann auch nur ankalziniert sein, wie es insbesondere bei der Flash-Kalzinierung auftritt. Zweckmäßigerweise ist ein Nachbehandeln mit einer Nachbehandlungszeit von mindestens 10 Minuten vorgesehen, weiter vorzugsweise mindestens 15 Minuten und weiter vorzugsweise ist die Nachbehandlungszeit kürzer als 30 Minuten. Hierdurch kann auch nur teilweise kalzinierter Gips sicher zu dem gewünschten Hartgips verarbeitet werden.

Bei der Nachbehandlung wird vorzugsweise für eine gute Durchmischung gesorgt. Dazu kann Fluidisiergas in den Nachreaktor zugeführt werden. Damit kann ein Anbacken bzw. Ausbildung toter Zonen im Nachreaktor verhindert werden, es kommt zu einer intensiven Durchmischung und damit zu einer gleichmäßigen und höheren Produktqualität. Das Fluidisiergas ist vorzugsweise heiß. Es kann dazu Systemabgas verwendet werden, wie es insbesondere beim Brennen des Ausgangsmaterials zum Beta-Hemihydratgips anfällt. Heißes Systemabgas kann im Nachreaktor auch hinzugeführt werden, ohne dass es zum Fluidisieren dient.

Vorzugsweise wird dem Nachreaktor Wasserdampf zugeführt. Auch hierfür eignet sich das mit Wasserdampf angereicherte Systemabgas des Brenners gut. Dies gilt besonders dann, wenn als Brenner eine Kalziniermühle verwendet wird. Dieses Abgas ist recht feucht (Wassergehalt etwa 35 %) und heiß (Temperatur mindestens 150°C). Bei Bedarf kann aber auch zusätzlich noch Wasser bzw. Wasserdampf zugeführt werden. Hierbei kann zur Bildung des Wasserdampfes ein Wärmetauscher vorgesehen sein, durch welchen das Systemabgas geführt wird und so den Wasserdampf für den Nachreaktor erzeugt.

Gemäß einer bevorzugten Ausführungsform, ist eine mechanische Agitation des Guts im Nachreaktor vorgesehen. Mit Vorteil erfolgt dies im Nachreaktor selbst, beispielsweise durch Homogenisieren. Hierunter wird das Behandeln des Guts mittels Turbo-Mischern verstanden. Damit wird eine effiziente Zerkleinerung der Kristalle erreicht, sodass die Blaine-Werte für die Oberfläche in der gewünschten Weise herabgesetzt werden können. Alternativ oder zusätzlich kann eine Nachzerkleinerung in einem auf die Nachreaktor folgenden Prozesse erfolgen. Insbesondere kann dies vor dem Kühlen des Hartgipses erfolgen, gegebenenfalls aber auch danach. Besonders gute Ergebnisse erzielt man durch Homogenisieren im Nachreaktor selbst, und zwar auch bei bei der Verwendung von synthetischen Gipsen als Rohmaterial.

Bewährte Parameter für das Verfahren sind das Durchführen der Nachbehandlung, bis eine spezifische Oberfläche (BET) von höchstens 4 m²/g und/oder ein Wasser-Gipswert von wesentlich kleiner als 0,6, vorzugsweise kleiner als 0,5 erreicht wird.

Schließlich sei noch angemerkt, dass ein wesentlicher Vorzug des Verfahrens darin liegt, dass es bis auf die Zufuhr von Wasserdampf, bei der Nachbehandlung, trocken durchgeführt werden kann. Dieser Aspekt ermöglicht eine gute Energieeffizienz und - zusammen mit dem Zuführen des Wasserdampfes bei der Nachbehandlung - die hohe Produktqualität.

Die Erfindung erstreckt sich weiter auf eine Anlage zur Durchführung des vorstehend beschriebenen Verfahrens. Die Anlage umfasst einen Brenner zum Kalzinieren und einen in Prozesslaufrichtung dahinterliegenden gesonderten Nachreaktor, die über Transportmittel für den kalzinierten Beta-Gips verbunden sind, wobei erfindungsgemäß die Transportmittel temperaturkontrolliert sind, in der Art, dass kalzinierter Gips oberhalb der Kalziniertemperatur gehalten ist und der Nachreaktor mit einer Zufuhreinrichtung für Hitze und Feuchte versehen ist und eine Steuereinrichtung aufweist, welche die Temperatur und den Druck im Nachreaktor oberhalb der Kalziniertemperatur bzw. dem Atmosphärendruck hält.

Ein entsprechender Nachrüstreaktor ist ebenfalls Gegenstand der Erfindung.

Die Erfindung wird nachfolgend unter Bezugnahme auf die beigefügte Zeichnung erläutert, in der ein vorteilhaftes Ausführungsbeispiel dargestellt ist. Es zeigen:

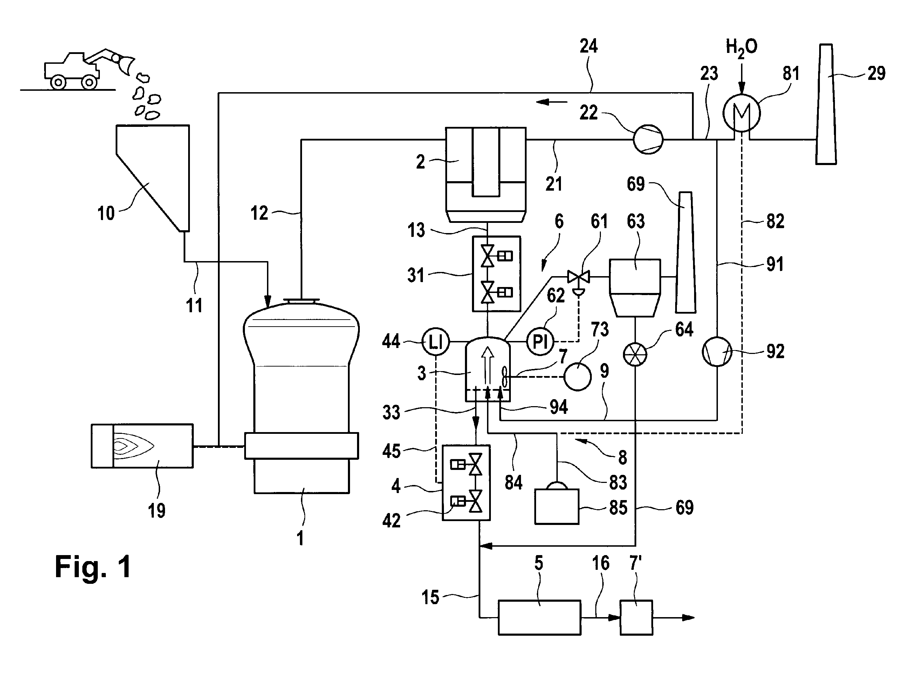

- Fig. 1: eine schematische Übersichtsdarstellung eines Ausführungsbeispiels einer Kalzinieranlage; und
- Fig. 2: eine Schnittansicht eines Nachreaktors der Kalzinieranlage.

Die Erfindung sei anhand eines Ausführungsbeispiels für eine Anlage erläutert, bei der durch eine Kalziniermühle kalzinierter Stuckgips weiterverarbeitet wird zu Hartgips.

Rohmaterial für das zu kalzinierende Gut wird an einer Aufgabestelle 10 in die Kalzinieranlage eingebracht. Bei dem Rohmaterial kann es sich um natürlichen Rohgips handeln, oder es können synthetische Gipse verwendet werden. Von der Aufgabestelle 10 gelangt das Rohmaterial über eine Leitung 11 an den Eingangsanschluss einer Kalziniermühle 1. Die Kalziniermühle 1 ist vorzugsweise als Flash-Kalzinierer ausgebildet. Sie umfasst Einrichtungen zum Zerkleinern und Kalzinieren des Rohmaterials. Um die für eine Flash-Kalzinierung notwendige hohe Temperatur von etwa 150°C bis 160°C zu erreichen, ist an der Kalziniermühle 1 ein Heißgasgenerator 19 angeschlossen. Für eine Flash-Kalzinierung reicht üblicherweise eine Verweilzeit von 10 Sekunden. Es sei angemerkt, dass auch eine an sich beliebig andere Art zur Kalzinierung des Rohmaterials vorgesehen sein kann. Nach der Kalzinierung verlässt der Gips die Kalziniermühle 1 über eine Ausgabeleitung 12. Der kalzinierte Gips (Stuckgips) weist eine Kristallform auf, die als Beta-Modifikation bezeichnet wird. Daher ist der Gips auch unter der Bezeichnung Beta-Hemidydratgips bekannt.

Der Stuckgips wird über die Leitung 12 zu einem Gas-Gipsseparator 2 zugeführt. Dieser trennt den kalzinierten Gips von dem aus der Kalziniermühle 1 in die Leitung 12 entwichenen Systemabgas. Das Systemabgas wird über eine Abgasleitung 21, eine Druckerhöhungsstufe 22 und eine Leitung 23 zu einem Abluftkamin 29 geführt. Weiter ist an die Leitung 23 eine Rücklaufleitung 24 angeschlossen, über die ein Teil des heißen Systemabgases in die Kalziniermühle 1 zurückgeführt wird. Weiter weist der Separator 2 an seinem Boden einen Auslass für den kalzinierten Gips auf. Er wird über eine Leitung 13 und einer Eingangsschleuse 31 einem Nachreaktor 3 zugeführt. Es sei angemerkt, dass die Temperatur des kalzinierten Gipses, wie er aus dem Separator 2 austritt und in den Nachreaktor 3 eintritt, nur wenig verringert wurde, und meist noch etwa 150°C beträgt. In jedem Fall soll die Temperatur über der Kalziniertemperatur von Dihydrat zwischen 90°C bis 95°C liegen.

Der Nachreaktor 3 ist als ein Druckreaktor ausgebildet. Zu diesem Zweck sind die Eingangsschleusen 31 vorgesehen, durch welche der über die Leitung 13 zugeführte kalzinierte Gips in den Nachreaktor 3 gelangt. Die Einlassschleuse 31 ist zu diesem Zweck mit 2 Schiebereinrichtungen versehen, die alternierend betätigt werden. In dem Nachreaktor 3 herrscht ein Überdruck von etwa 0,5 bar; Es ist auch möglich, niedrigere oder größere Überdrücke vorzusehen, insbesondere im Bereich von bis zu 1 bar. In dem Nachreaktor 3 wird der Stuckgips, welcher mit Kristallen in der sogenannten Beta-Modifikation vorliegt, unter Überdruck und Zuführung von Wasserdampf direkt umkristallisiert in eine Kristallform gemäß einer Alpha-Modifikation. Entscheidend ist hierbei eine Kombination aus Überdruck, einer Temperatur die mindestens über der Kalziniertemperatur von Dihydrat (90°C bis 95°C) liegt, sowie der Anwesenheit von angereicherter Feuchtigkeit, insbesondere durch Zuführung von Wasserdampf. Erfindungsgemäß erfolgt so die direkte Umkristallisation des Gipses von der Beta-Modifikation zur Alpha-Modifikation. Die Ausbildung der Kristalle vervollkommnet sich dabei, wobei Fehlstellen in den Kristallen verschlossen werden (heilen). Hierbei verringert sich die BET-Oberfläche auf Werte von weniger als 4 m²/g, wobei sich der Wassergipswert auf Werte wesentlich kleiner als 0,6, beispielsweise ein Wert von 0,4 erniedrigt. Mit dieser Umkristallisation zu Kristallen gemäß der Alpha-Modifikation, wird ein erheblicher Anstieg der Festigkeit des Gipsprodukts erreicht. Es entsteht Hartgips.

Der somit hergestellte Gips mit Alpha-Modifikation (Hartgips) verlässt den Nachreaktor 3 über den Auslass 33 und eine Ausgangsschleuse 42. Die Ausgangsschleuse 42 bildet einen Teil eines Mengenregelsystems 4, welcher die Menge des auszuschleusenden Hartgipses regelt. Darüber kann sowohl der Füllstand in dem Nachreaktor 3, wie auch die Verweildauer und damit der Umwandlungsprozess im Nachreaktor 3 gesteuert werden. Das Mengenregelsystem 4 weist dazu einen Füllstandssensor 46 auf, welcher in dem Nachreaktor 3 angeordnet ist. Der Sensor 46 kann in an sich bekannter Weise als Radarhöhenmesser ausgebildet sein. Er übermittelt sein Signal an einen Mengenregler 44, an dem Parameter über eine gewünschte Füllhöhe und die gewünschte Verweilzeit als Führungsgrößen einstellbar sind. Der Mengenregler 44 übermittelt in Abhängigkeit von dem durch den Sensor 46 gemessenen Wert Steuersignale, welche über eine Ausgangsleitung 45 an die Schieber der Ausgangsschleuse 42 angelegt sind.

Nach der Ausgangsschleuse 42 wird der noch heiße Hartgips über eine Leitung 15 an ein Eingabeende eines Drehrohrkühlers 5 transportiert. In diesem wird der Hartgips gekühlt, und schließlich über eine Leitung 16 abgeführt.

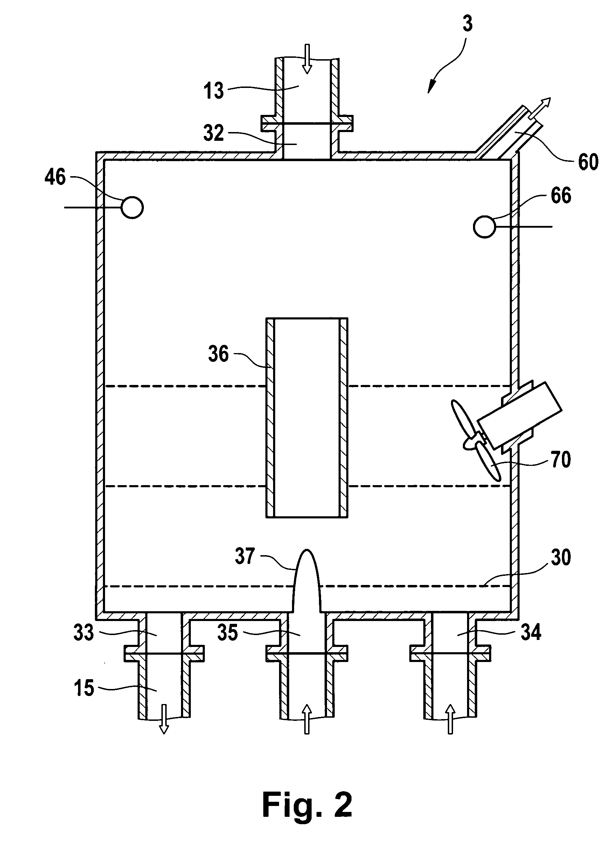

Nachfolgend seien der Nachreaktor 3 und die mit ihm zusammenwirkende Systeme und seine Funktionsweise näher unter Bezugnahme auf Fig. 2 erläutert. Der Nachreaktor 3 weist, außer dem Einlass 32 und Auslass 33 für den umzukristallisierenden Gips, einen Einlass 34 für Fluidisiergas sowie einen Einlass 35 für Prozessgas auf. Weiter ist in dem Inneren des Nachreaktors ein Fluidisierböden 30 angeordnet. Er umfasst im Wesentlichen einen Boden mit darunter angeordneten Hohlkammern zur Zuführung des Fluidisiergas, welches über den Anschluss 34 zugeführt ist. Das Fluidisiergas kann durch Öffnungen in den Fluidisierboden 35 nach oben austreten, und dabei eine auf den Fluidisierboden 35 aufliegende Schicht des zu behandelnden Gips, durchströmen und dabei fluidisieren. Weiter ist in der Mitte des Arbeitsraumes des Nachreaktors 3 ein von unten nach oben verlaufendes Steigrohr 36 vorgesehen. Das Steigrohr 36 ist von einem metallischen Rohrmantel gebildet. Es ist oberhalb des Anschlusses 35 für Prozessgas angeordnet, welcher in einer Düse 37 mündet. Diese Düse ist koaxial mit dem Zentrum des Steigrohrs 36 ausgerichtet. Damit wird erreicht, dass der über den Anschluss 35 zugeführte Prozessgasstrom in das Steigrohr 36 gerichtet wird. Dadurch fällt am unteren Ende des Steigrohrs 36, wo das Prozessgas von der Düse 37 eintritt, der statische Druck ab, wodurch Partikel aus der Umgebung herangesogen werden. Durch den Gasstrom 36 werden sie durch das Steigrohr 36 mit nach oben gerissen, und am oberen Ende wieder über den Innenraum verteilt. Es bildet sich damit eine Umwälzbewegung, welche für eine gute Durchmischung des Guts in den Arbeitsraum sorgt.

Weiter kann noch eine Mischeinrichtung 7 vorgesehen sein, welche den in der Seitenwand des Nachreaktors 3 eingelassene Turbomischer 70 umfasst. Sie sind von einer Steuereinrichtung 73 so angesteuert, dass eine Zerkleinerung der länglichen Kristallstrukturen der Beta-Modifikation zugeführten Gipses erfolgt. Damit wird die Angriffsfläche für die Umwandlung der Kristalle in die Alpha-Modifikation vergrößert. Das Zerkleinern ist insbesondere von Vorteil bei der Bearbeitung von synthetischen Gipsen als Ausgangsmaterial, welche von Haus aus eine markant langgestreckte Kristallform aufweisen. Im dargestellten Ausführungsbeispiel ist aus Gründen der Übersichtlichkeit nur ein Turbomischer 70 dargestellt, es sind vorzugsweise mehrere gleichmäßig über den Umfang verteilte Turbomischer 70 vorgesehen; gegebenenfalls auch in mehreren Etagen.

Das für die Fluidisierung über die Fluidisierböden 35 notwendige Gas kann mit Vorteil aus dem Systemabgas der Kalziniermühle 1 gewonnen werden, welches von dem Separator 2 in die Leitung 23 gespeist wird. Von dort kann es über eine Zapfleitung 91 abgenommen werden, und nach Druckerhöhung mittels einer Gaspumpe 92 über eine Leitung 94 dem Anschluss 34 als Fluidisiergas zugeführt werden. Auf diese Weise wird durch die Zuführung des heißen und feuchtem Systemabgases nicht nur eine Fluidisierung des Guts in dem Nachreaktor 3 erreicht, sondern es wird auch gleichzeitig für eine Druck- und Temperaturerhöhung gesorgt.

Für die Regelung des Drucks in dem Nachreaktor 3 ist ein Regelkreis 6 vorgesehen. Er umfasst ein Steuergerät 62, an welches das von einem Drucksensor 66 gemessene Signal angelegt ist. Das Steuergerät 62 ermittelt ein Ausgangssignal, welches an ein Stellventil 61 zur Regulierung der über eine Leitung 60 aus dem Nachreaktor 3 geführten Abluft ausgebildet ist. Die über die Leitung 60 abgeführte Abluft wird an einen Staubabscheider 63 angelegt. Die vom Staub befreite Abluft wird über einen Schornstein 69 abgeblasen. Der gesammelte Staub wird über eine Zellenradschleuse 64 und eine Leitung 69 der Ausgangsleitung 15 zugeführt. Die Druckregeleinheit 62 ist dazu ausgebildet, bei Ansteuerung des Druckregelventils 61 den Druck im Nachreaktor 3 einzustellen.

Für die Zuführung von Wasserdampf ist ein Wärmetauscher 81 vorgesehen, der zwischen die Leitung 23 und den Abluftkamin 29 für das Systemabgas vorgesehen ist. Mit diesem Systemabgas wird zugeführtes Wasser in dem Wärmetauscher 81 erwärmt, und über eine Leitung 82 einem Dampfkreis 8 zugeführt. Der Dampfkreis 8 umfasst ein Steuergerät 85, welches ein Mischventil 83, zur Bestimmung der Menge und durch Zumischen von Umgebungsluft, auch der Temperatur des zugeführten Dampfes, überwacht. Das so eingestellte Gasgemisch, wird über eine Leitung 84 dem Anschluss 35 für das Prozessgas zugeführt.

Damit können über die einzelnen Systeme der Druck, die Feuchtigkeit sowie die Temperatur in dem Nachreaktor 3 kontrolliert werden. Die Umwandlung des Stuckgipses zu Hartgips kann damit in dem Nachreaktor 3 durchgeführt werden, wobei lediglich Wasser und Systemabgas aus vorgeschalteten Prozessstufen, insbesondere der Kalziniermühle 1, zugeführt zu werden braucht; eine eigenständige Beheizung des Nachreaktors 3 ist nicht erforderlich.

Die an dem Nachreaktor 3 angeordnete Zerkleinerungsanlage 7, mit dem Turbomischer 70, kann ergänzt oder ersetzt werden, durch eine Nachzerkleinerung. Dazu ist nach der Ausgangsschleuse 42 eine Zerkleinerungseinheit 7' vorgesehen, die vor oder hinter dem Drehrohrkühler 5 angeordnet sein kann.

Diese Anlage ermöglicht damit die Durchführung des erfindungsgemäßen Verfahrens, und zwar im kontinuierlichen Betrieb, wie auch (insbesondere bei Vorsehen von zwei Nachreaktoren 3) im chargenweisen Betrieb. Es kann somit zugeführter Stuckgips, welcher von der Kalziniermühle 1, beispielsweise durch Flash-Kalzinierung erzeugt wurde, direkt umkristallisiert werden zu Hartgips, wobei die Beta-Modifikation der Hemihydratkristalle direkt umgewandelt wird, in die Alpha-Modifikation der Hemihydratkristalle, und zwar ohne dass zwischendurch eine Rehydratisierung zu Dihydrat erfolgt. Der Wassergipswert kann damit von Ausgangswerten größer 1 abgesenkt werden, auf Werte wesentlich kleiner als 0,6, und die BET-Oberfläche kann von Ausgangswerten 10 m²/g abgesenkt werden, auf Werte kleiner 3 m²/g.

## Patentansprüche

1. Verfahren zur Herstellung von Hartgips aus gebranntem Beta-Hemihydratgips, umfassend:
- Zuführen des Beta-Hemihydratgipses zu einem Nachreaktor (3),
- Nachbehandeln im Nachreaktor (3), wobei aus dem Beta-Hemihydratgips Hartgips entsteht,
- Ausbringen des Hartgipses aus dem Nachreaktor (3) und
- Kühlen,
**gekennzeichnet durch**
Kontrollieren der Temperatur bei Zuführen zum Nachreaktor (3) auf mindestens die Kalziniertemperatur, wobei in den Nachreaktor (3) Wasserdampf zugeführt wird und die Temperatur und der Druck im Nachreaktor (3) derart geregelt werden, dass die Temperatur mindestens die Kalziniertemperatur beträgt und ein Überdruck im Nachreaktor (3) herrscht.

2. Verfahren nach Anspruch 1, **dadurch gekennzeichnet, dass** der Überdruck mindestens 0,4 bar, vorzugsweise mindestens 0,5 bar und weiter vorzugsweise weniger als 1 bar beträgt.

3. Verfahren nach Anspruch 1 oder 2, **dadurch gekennzeichnet, dass** der Gips durch eine Druckschleuse (31) in den Nachreaktor (3) eingebracht wird.

4. Verfahren nach einem der vorangehenden Ansprüche, **dadurch gekennzeichnet, dass** für das Nachbehandeln mindestens 10 Minuten Nachbehandlungszeit vorgesehen sind, vorzugsweise mindestens 15 Minuten, und weiter vorzugsweise weniger als 30 Minuten.

5. Verfahren nach einem der vorangehenden Ansprüche, **gekennzeichnet durch** Zuführen von heißem Fluidisiergas in den Nachreaktor(3).

6. Verfahren nach einem der vorangehenden Ansprüche, **dadurch gekennzeichnet, dass** dem Nachreaktor (3) heißes Systemabgas zugeführt wird.

7. Verfahren nach Anspruch 6, **dadurch gekennzeichnet, dass** das Systemabgas zusätzlich mit Wasserdampf angereichert wird.

8. Verfahren nach einem der vorhergehenden Ansprüche, **dadurch gekennzeichnet, dass** der Wasserdampf über ein durch Systemabgase beheizten Wärmetauscher (81) erwärmt wird.

9. Verfahren nach einem der vorangehenden Ansprüche, **dadurch gekennzeichnet, dass** im Nachreaktor (3) oder danach eine mechanische Agitation des Gips durchgeführt wird.

10. Verfahren nach Anspruch 9, **dadurch gekennzeichnet, dass** die mechanische Agitation ein Homogenisieren vorzugsweise mittels Mischern (70) umfasst.

11. Verfahren nach Anspruch 9 oder 10, **dadurch gekennzeichnet, dass** die mechanische Agitation ein Nachzerkleinern nach dem Nachreaktor (3) umfasst.

12. Verfahren nach einem der vorangehenden Ansprüche, **dadurch gekennzeichnet, dass** bei der Nachbehandlung eine spezifische Oberfläche (BET) von höchstens 4 m²/g und/oder ein Wasser-Gipswert von deutlich kleiner als 0,6, vorzugsweise kleiner als 0,5 erreicht wird.

13. Verfahren nach einem der vorangehenden Ansprüche, **dadurch gekennzeichnet, dass** das Verfahren bis auf die Zufuhr von Wasserdampf trocken durchgeführt wird.

14. Kalzinieranlage zum Herstellen von Hartgips umfassend einen Brenner (1) zum Kalzinieren von Gips, einem in Prozesslaufrichtung dahinter liegenden gesonderten Nachreaktor (3), die beide über ein Transportmittel (12,13) für gebrannten Beta-Hemihydratgips verbunden sind
**dadurch gekennzeichnet, dass**
eine Temperaturkontrolle derart vorgesehen ist, dass der Beta-Hemihydratgips mit einer Temperatur oberhalb der Kalziniertemperatur dem Nachreaktor (3) zugeführt wird, wobei der Nachreaktor (3) Einrichtungen (8, 9) zum Zuführen von Feuchte und Hitze aufweist, und eine Steuereinrichtung (62,85) vorgesehen ist, welche im Nachreaktor (3) einen Überdruck und eine Temperatur über der Kalziniertemperatur aufrecht erhält.

15. Kalzinieranlage nach Anspruch 14, **dadurch gekennzeichnet, dass** sie nach einem der Ansprüche 2 bis 13 weitergebildet ist.

16. Nachrüstreaktor für Kalzinieranlagen zum Herstellen von Hartgips aus bereits kalzinierten Beta-Hemihydratgips
**dadurch gekennzeichnet, dass**
Anschlüsse (34/35) zum Zuführen von feuchtem und heißem Gas und weiter eine Steuereinrichtung (62, 85) vorgesehen sind, die dazu ausgebildet ist, im Nachrüstreaktor (3) einen Überdruck und eine Temperatur über Kalziniertemperatur zu halten.

17. Nachrüstreaktor nach Anspruch 15, **dadurch gekennzeichnet, dass** er nach einem der Ansprüche 3, 9 oder 10 weitergebildet ist.
